# EUROPÄISCHE PATENTSCHRIFT

(11) **EP 2 803 640 B1**
(45) Veröffentlichungstag und Bekanntmachung des Hinweises auf die Patenterteilung: **31.01.2018**
(21) Anmeldenummer: 14165688.4
(22) Anmeldetag: 23.04.2014
(51) Int. Cl.: C02F 1/76, C02F 1/68, C02F 103/42

(54) **Verfahren und Anlage zur Chlorung von Wasser**
Method and system for chlorination of water
Procédé et installation de chloration de l'eau

(30) Priorität: 13.05.2013 DE 102013208774
(43) Veröffentlichungstag der Anmeldung: 19.11.2014
(73) Patentinhaber: BWT AKTIENGESELLSCHAFT, 5310 Mondsee (AT)
(72) Erfinder: Johann, Jürgen, dr., 69226 Nussloch (DE); Bissen, Monique, Dr., 5310 Mondsee (AT); Schöppl, Alexander, 5310 Mondsee (AT)
(74) Vertreter: Patentanwaltskanzlei Cartagena

(56) Entgegenhaltungen:
- DE-T2- 60 013 283
- US-A- 3 846 424
- US-A1- 2008 006 587
- US-A1- 2008 017 588
- GOMA A ET AL: "Benefits of carbon dioxide as pH reducer in chlorinated indoor swimming pools", CHEMOSPHERE, PERGAMON PRESS, OXFORD, GB, Bd. 80, Nr. 4, 1. Juni 2010 (2010-06-01), Seiten 428-432, XP027070123, ISSN: 0045-6535, DOI: 10.1016/J.CHEMOSPHERE.2010.04.064 [gefunden am 2010-05-26]

## Beschreibung

Die vorliegende Erfindung betrifft ein Verfahren und eine Anlage zur Chlorung von Wasser. Des Weiteren betrifft die vorliegende Erfindung ein Schwimmbad mit einem Wasserbecken und einer solchen Anlage.

Bereits seit Jahrzehnten wird Chlor zur Desinfektion von Wasser, insbesondere im Bereich von Schwimmbädern, aber auch im Bereich der Trinkwasseraufbereitung, eingesetzt. In beiden Fällen wird das Wasser üblicherweise in einer Aufbereitungsanlage, die verschiedene Reinigungs- bzw. Filterstufen umfassen kann, behandelt.

Zur Eliminierung von Keimen umfassen derartige Aufbereitungsanlagen üblicherweise eine wirksame Desinfektion. Üblicherweise handelt es sich dabei um eine Chlorung, wie sie beispielsweise in der DIN 19 643 niedergelegt ist.

Gängige Chlorungsmethoden lassen sich grundsätzlich unterteilen in Verfahren, bei denen gasförmiges bzw. molekulares Chlor (Cl₂) in zu chlorendes Wasser eingeleitet wird und in Verfahren, bei denen das zu chlorende Wasser mit als Feststoff vorliegenden oder gelösten Chlorverbindungen direkt versetzt wird.

Die Chlorung mit gasförmigem Chlor (Cl₂) weist diverse Nachteile auf. Bekanntlich ist gasförmiges Chlor ein giftiges und umweltgefährliches Gas, das in Druckgasflaschen bereitgestellt wird. Für die Chlorung von Wasser mit gasförmigem Cl₂ ist daher eine spezielle Anlagentechnik mit entsprechenden Sicherheitsvorrichtungen erforderlich. Insbesondere für den Betrieb von privaten Schwimmbecken oder mittelgroßen Schwimmbädern, wie beispielsweise im Hotelbereich, kommt daher eine Chlorung mit gasförmigem Cl₂ meist nicht in Betracht.

Bei einer Chlorung mit als Feststoff vorliegenden oder gelösten Chlorverbindungen sind als Chlorquelle insbesondere Hypochlorite oder Hypochlorit-Lösungen gebräuchlich. Üblicherweise werden Calzium- oder Magnesiumhypochlorit (Ca(ClO)₂, Mg(ClO)₂) eingesetzt. Als Beispiel für eine organische Chlorverbindung, die als Feststoff vorliegt und bei Kontakt mit Wasser Chlor freisetzt, ist ferner Chlorisocyanursäure zu nennen.

Bei einem gebräuchlichen Verfahren unter Verwendung einer gelösten Chlorverbindung kommt als solche Chlorbleichlauge (in Wasser gelöstes Natriumhypochlorit (NaClO)) zum Einsatz. Bei diesem Verfahren wird zu chlorendes Wasser mittels Dosierpumpen mit einer Natriumhypochlorit-Lösung versetzt, wobei die Lösung üblicherweise in Gebinden bereitgestellt wird.

Das Chloren unter Verwendung der genannten als Feststoff vorliegenden oder gelösten Chlorverbindungen ist weniger gefährlich und auch anlagentechnisch weniger aufwendig als Chlorungen mittels gasförmigem Chlor.

Ein Nachteil, der bei dieser Vorgehensweise auftritt, ist allerdings der ungewünschte Eintrag von zusätzlichen Verbindungen in das zu chlorende Wasser. Neben Chlor werden dem Wasser zusätzlich Hydroxide, Chloride oder Carbonate zugeführt, meist in Form von Natrium, Calzium- oder Magnesiumsalzen. Es kommt im zu chlorenden Wasser also zu einer Anreicherung diverser Salze. Diese fördern häufig die Korrosion von Armaturen und Anlagenteilen und können sich darüber hinaus auch auf den pH-Wert des zu chlorenden Wassers negativ auswirken. Gemäß DIN 19 643 sollte der pH-Wert für Badewasser zwischen 6,5 und 7,6 betragen. Einem Anstieg des pH-Werts über die genannte Obergrenze hinaus muss daher durch Zugabe meist anorganischer Säuren wie Salzsäure (HCl) oder Schwefelsäure (H₂SO₄) entgegengewirkt werden, was die Ionenfracht des zu chlorenden Wassers noch weiter erhöht.

Bei Chlorungsverfahren auf Basis von Chlorisocyanursäure reichert sich die freie Cyanursäure im zu chlorenden Wasser an, wobei mit steigender Säurekonzentration die Desinfektionswirkung abnimmt. Daher bedarf es einer ständigen pH-Wertkontrolle und gegebenenfalls der Zugabe von pH-Wert absenkenden Mitteln wie Alkalicarbonaten.

Die DE 60013283 T2 befasst sich mit der Desinfektion von Trink- und Schwimmbadwasser mittels eines Druckbehälters, welcher Verbindungen enthalten kann, die in der Lage sind, aktives Chlor zu entwickeln. Beispielhaft sind Alkali- oder Erdalkali-Hypochlorite oder Chloramin-T genannt.

Aus der US 2008/0017588 A1 ist ein Verfahren zur Herstellung von sterilem Wasser bekannt, wobei eine Natriumhypochlorit- oder chloridlösung in ein mit Kohlenstoffdioxid gefülltes Druckgefäß eingesprüht wird.

Die US 2008/0006587 A1 offenbart ein Verfahren und eine Gerät für den Transfer von Kohlenstoffdioxidgas in eine wässrige Lösung, wobei das Gerät Teil einer Wasseraufbereitungsanlage sein kann.

Von Anton Gomä et al. (Chemosphere (2010) Vol. 80, 428-432) sind Untersuchungen beschrieben, welche die Vor- und Nachteile der pH-Wert-Einstellung mittels Kohlenstoffdioxid am Beispiel von drei Schwimmbädern aus Barcelona zeigen.

Der vorliegenden Erfindung lag die Aufgabe zugrunde, ein verbessertes Verfahren zur Chlorung von Wasser bereitzustellen, das die aus dem Stand der Technik bekannten Nachteile vermeidet. Insbesondere sollte bei dem Verfahren die Zugabe von Chemikalien zur pH-Werteinstellung wie Salzsäure oder Schwefelsäure soweit wie möglich vermieden werden. Ferner sollte das Verfahren möglichst einfach gehalten sein, um eine Anwendung auch für kleinere bis mittelgroße Wassermengen zu ermöglichen.

Diese Aufgabe wird gelöst durch das Verfahren mit den Merkmalen des Anspruchs 1 sowie die Anlage mit den Merkmalen des Anspruchs 7. Bevorzugte Ausführungsformen des erfindungsgemäßen Verfahrens sind in den abhängigen Ansprüchen 2 bis 6 angegeben. Eine bevorzugte Ausführungsform der erfindungsgemäßen Anlage findet sich in Anspruch 8. Darüber hinaus ist auch das Schwimmbad mit den Merkmalen des Anspruchs 9 Gegenstand der vorliegenden Erfindung.

Das erfindungsgemäße Verfahren zur Chlorung von Wasser dient insbesondere der Desinfektion von Schwimmbadwasser, kann allerdings grundsätzlich auch im Rahmen der Trinkwasseraufbereitung eingesetzt werden. Es umfasst stets die folgenden Schritte:
(a) Bereitstellen einer Chlorverbindung, die bei Kontakt mit Kohlendioxid gasförmiges Chlor freisetzt,
(b) Freisetzen von gasförmigem Chlor durch Inkontaktbringen der Chlorverbindung mit Kohlendioxid und
(c) Einleiten des freigesetzten Chlors in das zu chlorende Wasser.

Der Vorteil dieser Vorgehensweise liegt nun darin, dass die bereitgestellte Chlorverbindung mit dem zu chlorenden Wasser nicht direkt in Kontakt gebracht wird. Vielmehr erfolgt die Bildung von gasförmigem Chlor in einer vorgelagerten Reaktion mit Kohlendioxid, wobei entstehende Nebenprodukte nicht mit dem zu chlorenden Wasser in Kontakt treten. Ausschließlich das erzeugte gasförmige Chlor wird in das zu chlorende Wasser eingeleitet, was mit keinem der oben beschriebenen Nachteile verbunden ist.

Dem Fachmann sind Chlorverbindungen, die bei Kontakt mit Kohlendioxid gasförmiges Chlor freisetzen, grundsätzlich bekannt. Bevorzugt handelt es sich bei der verfahrensgemäß bereitgestellten Chlorverbindung um eine anorganische Verbindung, vorzugsweise um ein Salz einer Sauerstoffsäure von Chlor, bevorzugt um ein Alkali- und/oder Erdalkalimetallsalz. Besonders bevorzugt wird als Chlorverbindung ein Alkali- und/oder Erdalkalimetallsalz der Hypochlorigen Säure bereitgestellt. Insbesondere handelt es sich dabei um Magnesium- und/oder Calziumhypochlorit.

Magnesiumhypochlorit ist ein Feststoff mit einem Aktivchlorgehalt von etwa 50 %. Unter Aktivchlorgehalt ist der Anteil Chlor in der Verbindung zu verstehen, der sich durch Inkontaktbringen der Verbindung mit Kohlendioxid in Form von gasförmigem Chlor freisetzen lässt. Magnesiumhypochlorit kann insbesondere auch in Form einer Mischung zusammen mit Magnesiumhydroxid und Magnesiumchlorid bereitgestellt werden.

Calziumhypochlorit hat einen Aktivchloranteil von etwa 65 % und liegt ebenfalls als Feststoff vor. Calziumhypochlorit kann insbesondere auch in Form von Chlorkalk bereitgestellt werden. Bei Chlorkalk handelt es sich um ein Gemisch aus Calziumhypochlorit, Calziumchlorid und Calziumhydroxid.

Neben anorganischen Chlorverbindungen können verfahrensgemäß des Weiteren auch organische Chlorverbindungen, insbesondere die eingangs bereits erwähnten Derivate der Cyanur- und/oder Isocyanursäure, bereitgestellt und mit Kohlendioxid in Kontakt gebracht werden. Besonders bevorzugt handelt es sich bei den Derivaten um Mono-, Di- und Trichlorisocyanursäure oder Mischungen daraus.

Bevorzugt wird die Chlorverbindung in Form eines Feststoffs, vorzugsweise als Granulat, als Pulver oder als Tablette, bereitgestellt. Gegebenenfalls kann die Chlorverbindung auch in Form einer Lösung oder als Flüssigkeit eingesetzt werden, die gebunden an ein geeignetes Trägermaterial oder gebunden durch ein Absorptions- oder Adsorptionsmittel vorliegt.

Zur Freisetzung des gasförmigen Chlors wird die Chlorverbindung erfindungsgemäß mit Kohlendioxid in Kontakt gebracht.
Das Kohlendioxid kann dabei in Form eines Kohlendioxid enthaltenden Gases oder als reines Kohlendioxid mir der Chlorverbindung kontaktiert werden. Unter reinem Kohlendioxid soll dabei ein Gas mit einem Kohlendioxid-Volumenanteil > 99 % verstanden werden. In einer besonders bevorzugten Ausführungsform dient Luft als Kohlendioxidquelle. Die Chlorverbindung wird also im einfachsten Fall mit Umgebungsluft kontaktiert.
Das Inkontaktbringen der Chlorverbindung mit Kohlendioxid erfolgt im einfachsten Fall bevorzugt durch das Überleiten des Kohlendioxids oder des Kohlendioxid enthaltenden Gases über die, bevorzugt als Feststoff, bereitgestellte Chlorverbindung.
Besonders bevorzugt wird die Chlorverbindung in Form eines Festbetts bereitgestellt, welches von dem Kohlendioxid enthaltenden Gases durchströmt wird. Auf diese Weise lässt sich ein besonders gleichmäßiger und großflächiger Kontakt der beiden in unterschiedlichen Aggregatzuständen vorliegenden Komponenten realisieren.
Leitet man etwa Umgebungsluft durch eine Chlorkalk-Schüttung, so erfolgt eine Reaktion mit dem CO₂ der Luft nach folgendem Schema:

CaCl(OCl) + CO₂ → CaCO₃ + Cl₂ (1)

In Anwesenheit von Licht und Wärme kann bei der Zersetzung zusätzlicher bleichender Sauerstoff entstehen:

2 CaCl(OCl) + CO₂ → (h v, T) CaCO₃ + CaCl₂ + Cl₂ + O (2)

In der Summe entsteht somit Calciumcarbonat und Cl₂ nach Gleichung (1) oder zusätzlich CaCl₂ nach Gleichung (2). Das Calciumcarbonat bzw. das Calziumchlorid bleibt als Feststoff in der Schüttung und das Chlor wird mit der Luft dem zu chlorenden Wasser zugegeben. Zu einer Aufsalzung des Wassers kommt es dabei nicht. Das sich bildende Calciumcarbonat verbleibt in der Schüttung und gelangt nicht ins Wasser (analog hierzu verhalten sich alle bekannten Alkali- und/oder Erdalkalimetallsalz der Hypochlorigen Säure). Die eingangs erwähnte pH-Korrektur reduziert sich oder kann sogar komplett entfallen.

In Versuchen konnte gezeigt werden dass das CO₂ beim Durchleiten von Luft durch eine Chlorkalk-Schüttung nahezu stöchiometrisch Chlor freisetzt. Ein Kubikmeter (m³) Umgebungsluft enthält bei einer CO₂-Konzentration von 390 ppm ca. 766 mg CO₂. Hiermit lassen sich ca. 1220 mg Chlor erzeugen. Zur Produktion von 1 g Chlor / Stunde müssen somit ca. 0.82 m³ Luft durch eine Chlorkalk-Schüttung geleitet werden. Kleinere Schwimmbäder mit einem Beckenvolumen von ca. 50 m³ benötigen normalerweise ca. 5 bis 10 g Chlor / Stunde. Das entspricht einem Luftdurchsatz von zwischen 4 m³/h und 8 m³/h.

Gemäß einer weiteren Ausführungsform kann es sich bei dem Kohlendioxid enthaltenden Gas um Abgas einer Verbrennungsanlage handeln, beispielsweise das Abgas einer mit Erdgas betriebenen Heizungsanlage. Ein solches Abgas enthält - im Vergleich zu Umgebungsluft - in der Regel einen sehr viel höheren Anteil CO₂. Die Kohlendioxid enthaltenden Abgase werden bevorzugt nach Passage eines Partikelfilters in die Einrichtung zur Erzeugung von gasförmigem Chlor eingeleitet.

Alternativ ist es auch möglich, das in der Umgebungsluft enthaltene Kohlendioxid beispielsweise mittels CO₂-selektiver Membranen, die Sauerstoff- und/oder Stickstoffmoleküle schneller passieren lassen als CO₂-Moleküle, anzureichern, und das Produkt dieser Anreicherung (mit einem ebenfalls sehr viel höheren Anteil an CO₂) als Kohlendioxid enthaltendes Gas mit der Chlorverbindung zu kontaktieren.

In einigen bevorzugten Ausführungsformen wird das Kohlendioxid oder das Kohlendioxid enthaltende Gas vor dem Inkontaktbringen mit der Chlorverbindung getrocknet. Unter Trocknen soll dabei insbesondere die Entfernung von Wasser verstanden werden. Dazu durchläuft das Kohlendioxid enthaltende Gas, bevor es mit der Chlorverbindung in Kontakt gebracht wird, vorzugsweise eine Trockenstufe, in welcher es mit einem Trockenmittel, beispielsweise Phosphorpentoxid, in Kontakt gebracht wird.

Das bei Inkontaktbringen der Chlorverbindung mit Kohlendioxid freigesetzte gasförmige Chlor wird vorzugsweise direkt in das zu chlorende Wasser eingeleitet. Dies kann im einfachsten Fall dadurch geschehen, dass das gasförmige Chlor mittels einer geeigneten Einrichtung zum Einbringen eines Gases in eine Flüssigkeit, nämlich eines Injektors, in das zu chlorende Wasser eingebracht wird. Eine solche Einrichtung, insbesondere ein solcher Injektor, umfasst einen Eingang für das gasförmige Chlor und einen Auslass. Durch ersteren wird das Chlor in die Einrichtung, insbesondere in den Injektor, eingesaugt, durch letzteren wird das Chlor in das zu chlorende Wasser eingeblasen.

Indirekt kann eine solche Einrichtung auch dazu dienen, das Kohlendioxid oder das Kohlendioxid enthaltende Gas mit der Chlorverbindung zu kontaktieren. Beim Einblasen des Chlors in das zu chlorende Wasser entsteht am Eingang für das gasförmige Chlor ein Unterdruck. Da der Eingang mit der Kohlendioxidquelle über einen Behälter, in dem die Chlorverbindung angeordnet ist (ein solcher Behälter wird im Folgenden noch detailliert beschrieben), in kommunizierender Verbindung steht, gegebenenfalls wird durch den entstehenden Unterdruck auch Kohlendioxid oder kohlendioxidhaltiges Gas wie Umgebungsluft angesaugt und strömt in dem Behälter befindliche, beispielsweise als Festbett bereitgestellte Chlorverbindung durch. Mit anderen Worten, die Erzeugung und Bereitstellung des Chlors wird über die erwähnte Einrichtung, insbesondere den Injektor, gesteuert.
Entsprechend wird gemäß der vorliegenden Erfindung das freigesetzte Chlor mittels eines Injektors in das zu chlorende Wasser eingebracht, der einen Eingang besitzt, der in kommunizierender Verbindung mit einer Kohlendioxidquelle steht, so dass Kohlendioxid oder kohlendioxidhaltiges Gas angesaugt werden kann.
Die Regelung der Chlormenge kann beispielsweise durch Öffnen eines Bypass-Ventils erfolgen. Diese Variante eignet sich insbesondere für kleine Schwimmbäder.
Reines Kohlendioxid, insbesondere aus einer Kohlensäureflasche, kommt vor allem dann zum Einsatz, wenn der Chlorbedarf groß ist, zum Beispiel in öffentlichen Schwimmbädern oder in Hotelbädern. Hotelbäder benötigen in der Regel ca. 100 g Chlor / Stunde. Hierfür wäre eine CO₂-Menge von 62 g / Stunde theoretisch ausreichend. Für öffentliche Bäder reicht 1 kg CO₂ aus der Flasche für 1.6 kg Chlor aus.
Das CO₂ kann entweder direkt aus der Flasche über das Granulat geleitet werden, sicherer ist jedoch der Einsatz eines Druckreglers, wie er auch bei Chlorgasanlagen häufig üblich ist. Der Druckregler ist so aufgebaut, dass auf der Druckseite die Kohlensäure anliegt und erst dann Kohlensäure strömt, wenn ein Unterdruck am Regler anliegt.
Ein weiterer Gegenstand der vorliegenden Erfindung ist eine Anlage zur Chlorung von Wasser, die zum einen eine Einrichtung zur Erzeugung von gasförmigem Chlor und zum anderen eine Einrichtung zur Einspeisung des erzeugten Chlors in zu chlorendes Wasser umfasst.
Bei der Einrichtung zur Einspeisung des erzeugten gasförmigen Chlors handelt es sich um eine der oben bereits benannten Einrichtungen zum Einbringen von Chlor in Wasser, insbesondere um den bereits erwähnten Injektor. Bevorzugt ist die Einrichtung zur Einspeisung des erzeugten Chlors mittels eines ihr zugeordneten Reglers steuerbar, der eine mengenproportionale Beigabe von gasförmigem Chlor zu dem zu chlorenden Wasser ermöglicht.

Die Einrichtung zur Erzeugung von gasförmigem Chlor eignet sich insbesondere zur Chlorerzeugung im Rahmen des beschriebenen erfindungsgemäßen Verfahrens. Sie umfasst einen gasdichten Behälter, der eine bei Kontakt mit Kohlendioxid gasförmiges bzw. molekulares Chlor (Cl₂) freisetzende Chlorverbindung enthält, einen Einlass für Kohlendioxid oder Kohlendioxid enthaltendes Gas sowie einen Auslass für gasförmiges Chlor. Die Chlorverbindung ist zwischen dem Einlass und dem Auslass angeordnet.

Bei dem Behälter handelt es sich insbesondere um einen prismatischen oder zylindrischen Hohlkörper, welcher bevorzugt zwei gegenüberliegende Stirnseiten aufweist. Der Einlass und der Auslass sind vorzugsweise an diesen Stirnseiten angeordnet. Bevorzugt wird eine der Stirnseiten von dem Einlass durchbrochen und die andere von dem Auslass.

Bevorzugt liegt die Chlorverbindung als Festbett in dem Behälter vor. Die Anordnung zwischen dem Einlass und dem Auslass kann dabei gewährleisten, dass die Chlorverbindung gleichmäßig von dem durch den Einlass strömenden Kohlendioxid enthaltendem Gas durchströmt werden kann.

Das Material, aus welchem der Behälter gefertigt ist, ist unkritisch, solange es gegenüber dem freigesetzten gasförmigen Chlor resistent und beim Anlegen eines Über- oder Unterdrucks strukturell integer ist. Bevorzugt ist der Behälter aus einem Kunststoff gefertigt.

Bevorzugte Eigenschaften der in dem Behälter enthaltenen Chlorverbindung sowie ihre Beschaffenheit wurden bereits beschrieben, auf die entsprechenden Ausführungen im Rahmen der Beschreibung des erfindungsgemäßen Verfahrens wird hiermit verwiesen.

In bevorzugten Ausführungsformen ist der Behälter nur zur einmaligen Verwendung vorgesehen. Das heißt, der Behälter wird in regelmäßigen Abständen oder wenn die Kapazität der enthaltenen Chlorverbindung hinsichtlich freisetzbaren Chlors erschöpft ist, durch einen neuen, frischen Behälter ersetzt. Der Behälter weist in bevorzugten Ausführungsformen ein Detektions- und/oder Anzeigemittel auf, das feststellt und/oder anzeigt, wenn die Kapazität der Chlorverbindung erschöpft ist.

Es kann erfindungsgemäß allerdings auch vorgesehen sein, dass ausschließlich die Chlorverbindung ausgetauscht wird, wenn ihre Kapazität erschöpft ist. Zu diesem Zweck kann der Behälter - zusätzlich zu dem erwähnten Ein- und dem erwähnten Auslass - eine verschließbare Öffnung aufweisen, über die ein Austausch der enthaltenen Chlorverbindung möglich ist. Dies lässt sich beispielsweise durch eine gasdicht wiederverschließbare Klappe in der Behälterwand realisieren. Bei einer derartigen Ausführungsform ist es besonders bevorzugt, dass sich die Chlorverbindung in einem gasdurchlässigen Gebinde, beispielsweise einem Beutel oder Säckchen, befindet, das sich manuell gefahrlos entfernen und durch ein neues ersetzen lässt.

Die Einrichtung zur Erzeugung von gasförmigem Chlor umfasst den bereits beschriebenen Druckregler, welcher so aufgebaut ist, dass auf der Druckseite die Kohlendioxidquelle anliegt und erst dann Kohlendioxid strömt, wenn ein Unterdruck am Regler anliegt.

Weiterhin kann es bevorzugt sein, dass der Auslass des Behälters ein Mittel zur Regelung der Menge austretenden gasförmigen Chlors umfasst, insbesondere einem Ventil. Beispielsweise kann auf diese Weise der Auslass von gasförmigem Chlor an das Vorliegen eines bestimmten Drucks im Behälterinneren geknüpft werden.

Gemäß der vorliegenden Erfindung wird in einer erfindungsgemäßen Anlage die Erzeugung von Chlor mittels der Einrichtung zur Einspeisung des erzeugten gasförmigen Chlors mittels des Injektors gesteuert. Hierzu muss - wie erwähnt - der Eingang des Einrichtung, an dem bei Betrieb der Einrichtung ein Unterdruck entsteht, in kommunizierender Verbindung mit der Kohlendioxidquelle stehen, und zwar über den die Chlorverbindung enthaltenden Behälter. Dadurch ist gewährleistet, dass, wenn die Einrichtung größere Mengen an Chlor in das zu chlorende Wasser einbringt, auch größere Mengen Kohlendioxid oder kohlendioxidhaltiges Gas in den Behälter eingesaugt werden und in diesem - proportional zum eingesaugten Kohlendioxid - mehr Chlor erzeugt wird. Die Einrichtung fungiert somit als Regler der Chlorerzeugung. Besonders sicher ist diese Lösung, wenn dabei zwischen der Kohlendioxidquelle und dem Behälter der oben erwähnte Druckregler angeordnet ist.

Von der vorliegenden Erfindung umfasst ist jedes Schwimmbad, das neben dem obligatorischen Wasserbecken eine erfindungsgemäße Anlage umfasst, welche zur Chlorung des im Becken enthaltenen Wassers dienen.

Weitere Merkmale der Erfindung ergeben sich aus der nachfolgenden Beschreibung bevorzugter Ausführungsformen in Verbindung mit den beiden Zeichnungen und den Unteransprüchen.

Hierbei können die einzelnen Merkmale der Erfindung alleine oder in Kombination miteinander verwirklicht sein. Die beschriebenen Ausführungsformen dienen zur Erläuterung und zum besseren Verständnis der Erfindung und sind in keiner Weise einschränkend zu verstehen.

### Figurenbeschreibung

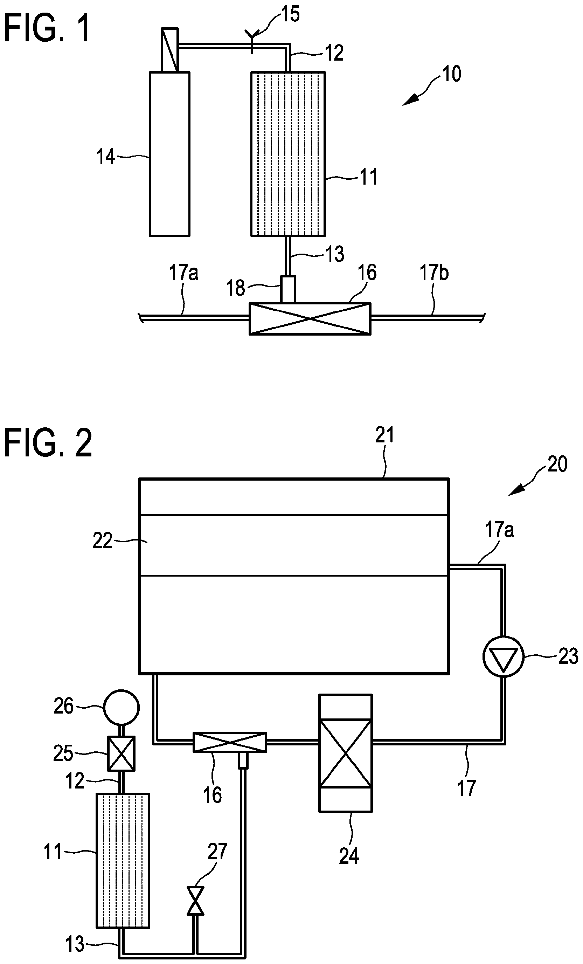

Bei der Darstellung in **Fig. 1** handelt es sich um ein Fließschema einer erfindungsgemäßen Anlage.

Bei der Darstellung in **Fig. 2** handelt es sich um ein Fließschema eines Schwimmbads, das ein mit einer erfindungsgemäßen Anlage gekoppeltes Schwimmbecken aufweist.
**Fig. 1** zeigt die schematische Darstellung einer erfindungsgemäßen Anlage **10** zur Chlorung von Wasser. Zentrales Element der Anlage **10** ist die Einrichtung **11** zur Erzeugung von gasförmigem Chlor. Bei der Einrichtung **11** handelt es sich um einen Calziumhypochlorit enthaltenden Behälter. Die Einrichtung **11** verfügt über einen Einlass **12** für Kohlendioxid sowie über einen Auslass **13** für gasförmiges Chlor. Der Einlass **12** ist mit einer Druckgasflasche **14** verbunden, welche verflüssigtes Kohlendioxid enthält und als Kohlendioxid-Quelle fungiert. Zwischen der Gasflasche **14** und dem Einlass **12** ist ein Druckregler **15** angeordnet, mit dem sich die Gaszufuhr in die Einrichtung **11** steuern lässt. Der Druckregler **15** lässt Kohlendioxid nur dann passieren, wenn ein Unterdruck an ihm anliegt. Das Kohlendioxid wird in die Einrichtung **11** bevorzugt derart eindosiert, dass das zwischen dem Einlass **12** und dem Auslass **13** in der Einrichtung **11** angeordnete Calziumhypochlorit gleichmäßig durchströmt wird. Das sich dabei bildende gasförmige Chlor gelangt über den Auslass **13** zu einem Gasinjektor **16**, in den es über den Eingang **18** eingesaugt wird. Hierbei entsteht ein Unterdruck, über den weiteres Chlor aus der Einrichtung **11** gezogen wird. Fällt der Druck in der Einrichtung unter einen Schwellenwert, so spricht der Druckregler **15** an und es wird mehr Kohlendioxid aus der Druckgasflasche **14** in die Einrichtung **11** eingespeist. In der Folge wird in dieser mehr Chlor erzeugt. Der Gasinjektor **16** ist einem nur ausschnittweise dargestellten Wasserkreislauf zugeordnet, der das zu chlorende Wasser führt. Dieses wird über den Zulauf **17a** herangeführt und über den Ablauf **17b** abgeführt. Das erzeugte gasförmige Chlor wird mit Hilfe des Injektors **16** in das zu chlorende Wasser eingeblasen und entfaltet seine desinfizierende Wirkung.
**Fig. 2** zeigt ein Schwimmbad **20** mit einem Schwimmbecken **21**, das über eine Überlaufrinne **22** verfügt. Das in die Überlaufrinne **22** eintretende Beckenwasser, im allgemeinen auch als Schwallwasser bezeichnet, gelangt über den Zugang **17a** in einen Schwallwasserkreislauf **17**, über welchen eine permanente Umwälzung des Wassers stattfindet. Hierzu ist der Schwallwasserkreislauf **17** mit einer Umwälzpumpe **23** versehen. Der Umwälzpumpe **23** nachgeordnet ist eine Filteranlage **24**, in welcher das Schwallwasser mit einem Flockungsmittel versetzt wird, um grobe Schmutzteile zu binden. Der Filteranlage **24** nachgeordnet ist ein Gasinjektor **16** zum Einleiten von gasförmigem Chlor. Das gasförmige Chlor stammt aus einer Einrichtung **11** zur Erzeugung von gasförmigem Chlor, wie sie in Fig. 1 beschrieben wurde (entsprechende Elemente sind mit gleichen Bezugsziffern gekennzeichnet). Im Unterschied zur Ausführungsform gemäß Fig. 1 steht der Einlass **12** der Einrichtung **11** allerdings über einen Kompressor **25** mit der Umgebungsluft **26** in Verbindung. Mittels des Kompressors **25** gelangt Umgebungsluft mit Überdruck in die Einrichtung **11**. Da die Umgebungsluft einen Anteil an Kohlendioxid enthält, wird in dieser gasförmiges Chlor erzeugt, welches aus der Einrichtung **11** über den Auslass **13** abgeführt und über den Gasinjektor **16** dem Schwallwasserkreislauf **17** zugeführt wird. Gegebenenfalls kann zwischen dem Auslass **13** und dem Injektor **16** ein Ventil **27** angeordnet sein, mit dem sich die Chlorzufuhr entweder unterbrechen oder die Chlorkonzentration beispielsweise durch Zufuhr von Umgebungsluft reduzieren lässt. Das mittels des Injektors **16** mit Chlor versetzte Schwallwasser gelangt über den Einlass **17b** zurück in das Schwimmbecken **21**.

## Patentansprüche

1. Verfahren zur Chlorung von Wasser mit den Schritten:
(a) Bereitstellen einer Chlorverbindung, die bei Kontakt mit Kohlendioxid gasförmiges Chlor freisetzt, in einem gasdichten Behälter mit einem Einlass für Kohlendioxid oder Kohlendioxid enthaltendes Gas und einem Auslass für gasförmiges Chlor, wobei die Chlorverbindung zwischen dem Einlass und dem Auslass angeordnet ist,
(b) Freisetzen von gasförmigem Chlor durch Inkontaktbringen der Chlorverbindung mit aus einer Kohlendioxidquelle stammendem Kohlendioxid, wobei die Kohlendioxidquelle mit dem Einlass des gasdichten Behälters gekoppelt ist und
(c) Einleiten des freigesetzten Chlors in das zu chlorende Wasser,
wobei das freigesetzte Chlor mittels eines Injektors (16) in das zu chlorende Wasser eingebracht wird und der Injektor (16) einen Eingang besitzt, der in kommunizierender Verbindung mit der Kohlendioxidquelle steht, und wobei zwischen der Kohlendioxidquelle und dem Behälter ein Druckregler angeordnet ist, der Kohlendioxid nur dann passieren lässt, wenn ein Unterdruck an ihm anliegt, so dass, wenn bei Betrieb des Injektors am Eingang des Injektors ein Unterdruck entsteht, Kohlendioxid oder kohlendioxidhaltiges Gas angesaugt wird.

2. Verfahren nach Anspruch 1, **dadurch gekennzeichnet, dass** als Chlorverbindung ein Salz, vorzugsweise ein Salz einer Sauerstoffsäure von Chlor, vorzugsweise von Hypochloriger Säure, bereitgestellt wird.

3. Verfahren nach Anspruch 1, **dadurch gekennzeichnet, dass** als Chlorverbindung ein Derivat der Cyanursäure und/oder Isocyanursäure, insbesondere Di- und/oder Trichlorisocyanursäure, bereitgestellt wird.

4. Verfahren nach einem der vorhergehenden Ansprüche, **dadurch gekennzeichnet, dass** die Chlorverbindung in Form eines Feststoffs, vorzugsweise als Granulat, als Pulver oder als Tablette, bereitgestellt wird.

5. Verfahren nach einem der vorhergehenden Ansprüche, **dadurch gekennzeichnet, dass** die Menge des bereitgestellten Kohlendioxids proportional ist zu der Menge Chlor, die dem zu chlorenden Wasser mittels des Injektors zugesetzt wird.

6. Verfahren nach einem der vorhergehenden Ansprüche, **dadurch gekennzeichnet, dass** die Chlorverbindung mit einem Kohlendioxid enthaltenden Gas, vorzugsweise mit Luft, mit reinem Kohlendioxid oder mit einer anderen Kohlendioxidquelle in Kontakt gebracht wird.

7. Anlage zur Chlorung von Wasser, umfassend eine
• Einrichtung zur Erzeugung von gasförmigem Chlor, umfassend einen gasdichten Behälter, enthaltend eine bei Kontakt mit Kohlendioxid gasförmiges Chlor freisetzende Chlorverbindung, einen Einlass für CO₂-haltiges Gas und einen Auslass für gasförmiges Chlor, wobei die Chlorverbindung zwischen dem Einlass und dem Auslass angeordnet ist
sowie
• einen Injektor (16) als Einrichtung zur Einspeisung des erzeugten Chlors in zu chlorendes Wasser,
wobei der Injektor (16) einen Eingang besitzt, der über den gasdichten Behälter in kommunizierender Verbindung mit einer Kohlendioxidquelle steht, so dass, wenn bei Betrieb des Injektors am Eingang des Injektors ein Unterdruck entsteht, Kohlendioxid oder kohlendioxidhaltiges Gas in den Behälter eingesaugt wird und wobei zwischen der Kohlendioxidquelle und dem Behälter ein Druckregler angeordnet ist, der Kohlendioxid nur dann passieren lässt, wenn ein Unterdruck an ihm anliegt.

8. Anlage nach Anspruch 7, **dadurch gekennzeichnet, dass** es sich bei dem Behälter um einen prismatischen oder zylindrischen Hohlkörper handelt, wobei der Einlass und der Auslass vorzugsweise stirnseitig, insbesondere gegenüberliegend, angeordnet sind

9. Schwimmbad (20) mit einem Wasserbecken (21) und einer Anlage nach einem der Ansprüche 7 oder 8 zur Chlorung des darin enthaltenen Wassers.

## Claims

1. Method for chlorination of water comprising the following steps:
(a) provision of a chlorine compound that releases gaseous chlorine on contact with carbon dioxide in a gas-tight container with an inlet for carbon dioxide or carbon-dioxide-containing gas and an outlet for gaseous chlorine, wherein the chlorine compound is arranged between the inlet and the outlet,
(b) releasing of gaseous chlorine by bringing the chlorine compound into contact with carbon dioxide originating from a carbon dioxide source, wherein the carbon dioxide source is connected to the inlet of the gas-tight container and
(c) introduction of the released chlorine into the water to be chlorinated,
wherein the released chlorine is brought into the water to be chlorinated by means of an injector (16) and the injector (16) has an intake that communicates with the carbon dioxide source, and wherein a pressure regulator is arranged between the carbon dioxide source and the container that allows carbon dioxide to pass only when said pressure regulator is under a vacuum, so that when a vacuum occurs at the intake of the injector during operation of said injector, carbon dioxide or carbon dioxide-containing gas is suctioned in.

2. Method according to Claim 1, **characterized in that** a salt, preferably a salt of an oxyacid of chlorine, and more preferably of hypochlorous acid, is provided as a chlorine compound.

3. Method according to Claim 1, **characterized in that** a derivative of cyanuric acid and/or isocyanuric acid, more particularly di- and/or trichloroisocyanuric acid, is provided as a chlorine compound.

4. Method according to one of the preceding claims, **characterized in that** the chlorine compound is provided in the form of a solid, and preferably a granulate, a powder, or a tablet.

5. Method according to one of the preceding claims, **characterized in that** the amount of the carbon dioxide provided is proportional to the amount of chlorine that is added by means of the injector to the water to be chlorinated.

6. Method according to one of the preceding claims, **characterized in that** the chlorine compound is brought into contact with a carbon-dioxide-containing gas, and preferably with air, pure carbon dioxide or another carbon dioxide source.

7. System for chlorination of water, comprising a
• device for producing gaseous chlorine, comprising a gas-tight container containing a chlorine compound that releases gaseous chlorine on contact with carbon dioxide, an inlet for CO₂-containing gas and an outlet for gaseous chlorine, wherein the chlorine compound is arranged between the inlet and the outlet,
and
• an injector (16) as a device for feeding the chlorine produced into the water to be chlorinated, wherein the injector (16) has an intake that communicates via the gas-tight container with a carbon dioxide source, so that when a vacuum occurs at the intake of the injector during operation of said injector, carbon dioxide or carbon dioxide-containing gas is suctioned into the container,
and wherein a pressure regulator is arranged between the carbon dioxide source and the container that allows carbon dioxide to pass only when said pressure regulator is under a vacuum.

8. System according to Claim 7, **characterized in that** the container is a prismatic or cylindrical hollow body, wherein the inlet and the outlet are preferably arranged frontally, and more particularly opposite each other.

9. Swimming pool (20) with a water tank (21) and a system according to one of Claims 7 or 8 for chlorinating the water contained therein.

## Revendications

1. Procédé de chloration d'eau comprenant les étapes suivantes :
(a) la préparation d'un composé de chlore, qui libère du chlore gazeux au contact de dioxyde de carbone, dans un contenant étanche aux gaz comprenant une entrée pour le dioxyde de carbone ou un gaz contenant du dioxyde de carbone, et une sortie pour le chlore gazeux, le composé de chlore étant agencé entre l'entrée et la sortie,
(b) la libération de chlore gazeux par mise en contact du composé de chlore avec du dioxyde de carbone issu d'une source de dioxyde de carbone, la source de dioxyde de carbone étant couplée avec l'entrée du contenant étanche aux gaz, et
(c) l'introduction du chlore libéré dans l'eau à chlorer,
le chlore libéré étant introduit au moyen d'un injecteur (16) dans l'eau à chlorer et l'injecteur (16) comprenant une entrée, qui communique avec la source de dioxyde de carbone, et un régulateur de pression étant agencé entre la source de dioxyde de carbone et le contenant, qui ne laisse passer le dioxyde de carbone que lorsqu'une sous-pression lui est appliquée, de sorte que lorsqu'une sous-pression se produit à l'entrée de l'injecteur lors de l'exploitation de l'injecteur, du dioxyde de carbone ou un gaz contenant du dioxyde de carbone soit aspiré.

2. Procédé selon la revendication 1, **caractérisé en ce qu'**un sel, de préférence un sel d'un oxyacide de chlore, de préférence d'acide hypochloreux, est préparé en tant que composé de chlore.

3. Procédé selon la revendication 1, **caractérisé en ce qu'**un dérivé de l'acide cyanurique et/ou de l'acide isocyanurique, notamment l'acide di- et/ou trichloroisocyanurique, est préparé en tant que composé de chlore.

4. Procédé selon l'une quelconque des revendications précédentes, **caractérisé en ce que** le composé de chlore est préparé sous la forme d'un solide, de préférence sous la forme d'un granulé, sous la forme d'une poudre ou sous la forme de comprimés.

5. Procédé selon l'une quelconque des revendications précédentes, **caractérisé en ce que** la quantité du dioxyde de carbone préparé est proportionnelle à la quantité de chlore qui est ajoutée à l'eau à chlorer au moyen de l'injecteur.

6. Procédé selon l'une quelconque des revendications précédentes, **caractérisé en ce que** le composé de chlore est mis en contact avec un gaz contenant du dioxyde de carbone, de préférence avec de l'air, avec du dioxyde de carbone pur ou avec une autre source de dioxyde de carbone.

7. Unité pour la chloration d'eau, comprenant :
- un dispositif pour la génération de chlore gazeux, comprenant un contenant étanche aux gaz, contenant un composé de chlore libérant du chlore gazeux au contact de dioxyde de carbone, une entrée pour le gaz contenant du CO₂ et une sortie pour le chlore gazeux, le composé de chlore étant agencé entre l'entrée et la sortie,
ainsi que
- un injecteur (16) en tant que dispositif pour l'introduction du chlore généré dans l'eau à chlorer, l'injecteur (16) comprenant une entrée, qui communique avec une source de dioxyde de carbone par le biais du contenant étanche aux gaz, de sorte que lorsqu'une sous-pression se produit à l'entrée de l'injecteur lors de l'exploitation de l'injecteur, du dioxyde de carbone ou un gaz contenant du dioxyde de carbone soit aspiré dans le contenant, et un régulateur de pression étant agencé entre la source de dioxyde de carbone et le contenant, qui ne laisse passer le dioxyde de carbone que lorsqu'une sous-pression lui est appliquée.

8. Unité selon la revendication 7, **caractérisée en ce que** le contenant est un corps creux prismatique ou cylindrique, l'entrée et la sortie étant de préférence agencées sur le côté avant, notamment opposées.

9. Piscine (20) comprenant un bassin (21) et une unité selon l'une quelconque des revendications 7 ou 8 pour la chloration de l'eau qu'il contient.
